# EUROPEAN PATENT APPLICATION

(11) **EP 1 732 092 A1**
(43) Date of publication of application: **13.12.2006**
(21) Application number: 05727123.1
(22) Date of filing: 24.03.2005
(51) Int. Cl.: H01H 3/12, H01H 21/00, F16C 11/04

(54) **HINGE STRUCTURE AND HINGE STRUCTURE MEMBER**

(30) Priority: 29.03.2004 JP 2004095231
(71) Applicant: Pioneer Corporation, Tokyo 153-8654 (JP)
(72) Inventor: KIMURA, Masayuki; c/o PIONEER CORPORATION, Kawagoe-shi Saitama; 3508555 (JP); SASAKI, Takahiro; c/o PIONEER CORPORATION, Kawagoe-shi Saitama; 3508555 (JP)
(74) Representative: Haley, Stephen
(86) International application number: PCT/JP2005/005330
(87) International publication number: WO 2005/093768

(57) **Abstract**

A hinge structure and a hinge structure member capable of relieving stress concentration around the connected portions of the hinge structure. The hinge structure comprises a pair of connection portions connected to the connected portions and an elastically deformable hinge portion having both ends arranged continuously with the pair of connection portions so that the pair of the connected portions can be swingably connected to each other. At least one of the connection portions extends in a specified axial direction along the specified surface of the connected portions, and connected continuously with the surface over a specified length.

## Description

### [TECHNICAL FIELD]

The present invention relates to a hinge structure and a hinge structure member.

### [BACKGROUND ART]

Conventionally, hinge structures such as a mechanical hinge, an elastic joint and the like have been used for supporting or connecting a movable portion to a fixed portion.
For example, an operating portion of electrical equipment is provided with a lot of operation buttons. As the operating portion, a structure in which a switch element is arranged on a printed board and an operation button indirectly presses the switch element is widely employed in recent years.

As the operation button, a structure in which the operation button is swingably supported to a given support frame via a hinge structure is employed. As the hinge structure, a shaft-like joint that connects the operation button and the support frame is employed.
In many cases, the operation button, the hinge structure and the support frame are integrally formed by molding an elastically deformable synthetic resin to serve as a hinge structure member having the aforesaid hinge structure.

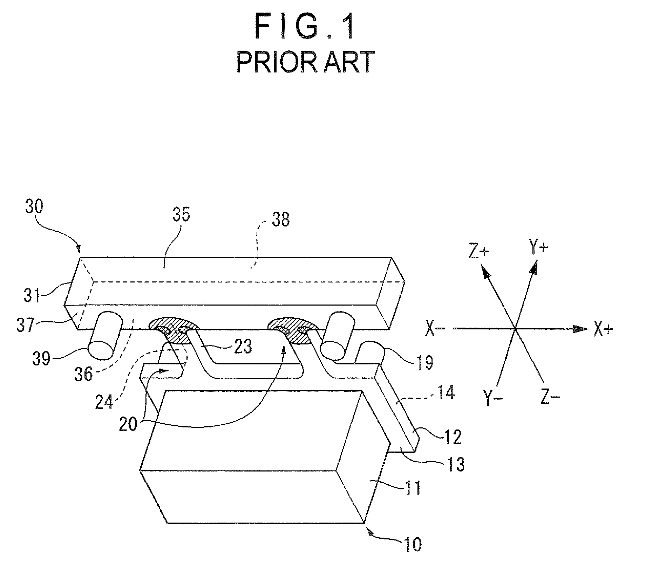

Fig. 1 shows a prior art of the aforesaid hinge structure member.
The hinge structure member is an operation button assembly of on-vehicle equipment such as a car audio device or a car navigation system, in which an operation button 10 is connected with a support frame 30 via hinge structures 20.

The support frame 30 is fixed to a structural portion of the equipment such its case. The support frame 30 has a main body 31 for example. The main body 31 is provided, at predetermined positions thereof, with fixing pins 39 for fixing the support frame 30 to the structural portion.

The operation button 10 is exposed from the equipment. The operation button 10 has a button body 11 and a flange 12 that is formed on the periphery of the rear side of the button body 11. A user touches the operation button 10 with a finger to operate the equipment. A press pin 18 is provided on a rear surface of the flange 12, so that a switch element or the like on a board provided on the rear side (in the positive direction of the Y-axis shown in the figure) of the support frame 30 can be operated by being pressed by the press pin 18.

The hinge structures 20 are each formed by a shaft-like member. The shaft-like members are continuously erected from a flange 12 in the Z-axis direction and continuously connected to a surface (the surface 36) facing to the flange 12 of a main body 31.
The operation button 10, the hinge structures 20 and the support frame 30 are integrally formed by molding a synthetic resin. A connection portion that connects the shaft-like member of the hinge structure 20 and the flange 12 and a connection portion that connects the shaft-like member of the hinge structure 20 and the main body 31 respectively have a surface smoothly continued by a predetermined R.

In such a hinge structure member, the hinge structure 20 is bent by the pressure of the operation button 10, and the operation button 10 swings relative to the support frame 30, so that the operation of the switch element on the rear side is performed.

### [DISCLOSURE OF THE INVENTION]

### [PROBLEMS TO BE SOLVED BY THE INVENTION]

In the hinge structure described above, the hinge structure 20 is bent by the pressure of the operation button 10 and the operation button 10 swings relative to the support frame 30. Such operation is repeatedly performed. By repeatedly performing such operation, the hinge structure 20 and predetermined positions therearound are susceptible to breakage.

A stress analysis was carried out to the hinge structure member shown in Fig. 1 while the operation button 10 was being pressed. It is known from the result of the analysis that high stress concentration is observed around the root of the hinge structure 20 on the side of the support frame 30 (the hatched area), and the stress concentration shows particularly high value at two corners of the hinge structure 20 (the cross-hatched areas).
The shorter the hinge structure 20 in the axial direction (the Z-axis direction) is, the higher the stress concentration is.
To a car audio device, since its operation panel has a given size, and additionally, since its display that employs an LCD becomes large in recent years, there arise problems deprived from a limited space for arranging the operation button.

An object of the present invention is to provide a hinge structure and a hinge structure member capable of relieving stress concentration around connected portions of the hinge structure.

### [MEANS FOR SOLVING THE PROBLEMS]

A hinge structure according to an aspect of the present invention includes: a hinge portion for swingably connecting a pair of connected portions to each other; and a pair of connection portions adapted to connect the hinge portion to the connected portions, wherein at least one of the connection portions is extended in an axial direction along a specified surface of one of the connected portions and continuously connected to the specified surface.
A hinge structure member according to another aspect of the present invention includes: a pair of connected portions; a hinge portion for swingably connecting the pair of connected portions to each other; and a pair of connection portions adapted to connect the hinge portion to the connected portions, wherein at least one of the connection portions is extended in an axial direction along a specified surface of one of the connected portions and continuously connected to the specified surface.

### [BRIEF DESCRIPTION OF DRAWINGS]

[FIG 1] Fig. 1 is a perspective view showing a prior art;
[FIG 2] Fig. 2 is a perspective view showing a first embodiment of the present invention;
[FIG 3] Fig. 3 is a front elevational view showing the first embodiment;
[FIG 4] Fig. 4 is a side elevational view showing the first embodiment;
[FIG 5] Fig. 5 is a plan view showing the first embodiment;
[FIG 6] Fig. 6 is a perspective view showing a second embodiment of the present invention;
[FIG 7] Fig. 7 is a perspective view showing a third embodiment of the present invention;
[FIG 8] Fig. 8 is a perspective view showing a fourth embodiment of the present invention;
[FIG 9] Fig. 9 is a side elevational view showing a fifth embodiment of the present invention;
[FIG 10] Fig. 10 is a side elevational view showing a sixth embodiment of the present invention;
[FIG 11] Fig. 11 is a side elevational view showing a seventh embodiment of the present invention; and
[FIG 12] Fig. 12 is a perspective view showing a modification of the present invention.

### [EXPLANATION OF CODES]

10... operation button
11... button body
12...flange
20... hinge structure
21...hinge portion
22 ... connection portion
30...support frame
31...main body
32...recessed portion
33... surface

### [BEST MODE FOR CARRYING OUT THE INVENTION]

Preferred embodiments of the present invention will be described below with reference to the attached drawings.

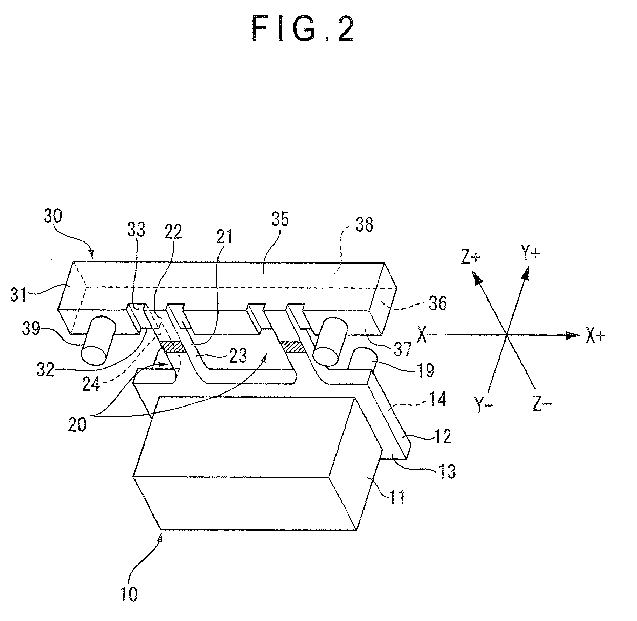

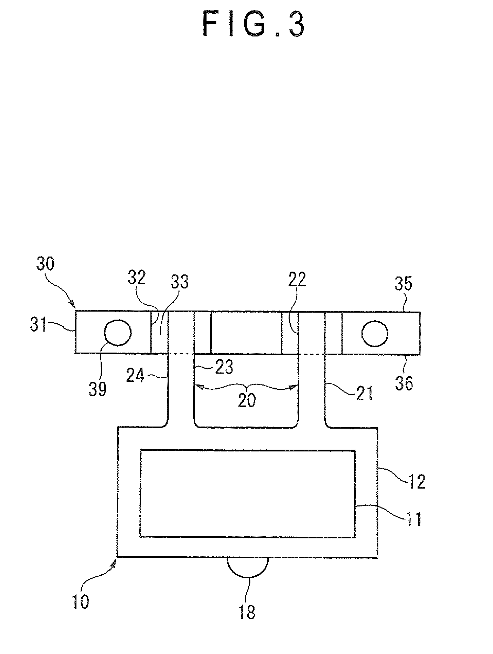

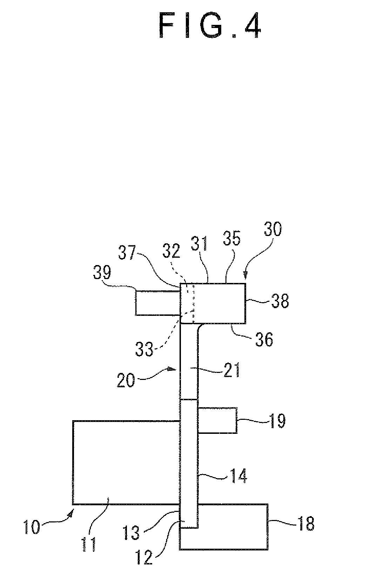

Figs. 2 to 5 show a first embodiment of the present invention.
The present embodiment relates to a hinge structure member similar to the aforesaid prior art shown in Fig. 1. In the following description, like components are denoted by like numerals as of the hinge structure member shown in Fig. 1.

The hinge structure member of the present embodiment is an operation button assembly of on-vehicle equipment such as a car audio device or a car navigation system, in which an operation button 10 is connected to a support frame 30 via hinge structures 20.
The operation button 10, the hinge structures 20 and the support frame 30 are integrally formed by molding a synthetic resin. The hinge structures 20 have given elastic deformation performance.

The support frame 30 is fixed to a structural portion of the equipment such as its case. The support frame 30 has a main body 31. The main body 31 is provided, at predetermined positions thereof, with fixing pins 39 for fixing the support frame 30 to the structural portion.

The operation button 10 is exposed from the equipment. The operation button 10 has a button body I and a flange 12 that is formed on the periphery of the rear side of the button body 11. The user touches the operation button 10 with a finger to operate the equipment.
A press pin 18 is provided on a rear surface of the flange 12, so that a switch element or the like on a board provided on the rear side (in the positive direction of the Y-axis as shown in Fig. 2) of the support frame 30 can be operated by being pressed by the press pin 18.
Further, a press pin 19 is provided on the rear surface of the flange 12. The press pin 19 serves as a stopper for restricting the displacement of the operation button 10, so that a connection portion is prevented from breakage caused by increased displacement of the operation button 10 when the switch element or the like is pressed by the operation button 10.

The hinge structures 20 are formed by a pair of shaft-like members continued in the Z-axis direction (referred to as "axial direction" in the claims). Each of the shaft-like members includes a connection portion on the side of the operation button 10, a connection portion 22 on the side of the support frame 30, and a hinge portion 21 connecting these connection portions.

The hinge portion 21 is formed into a square column having the same thickness as that of the flange 12, the hinge portion 21 extending linearly and having a uniform cross section.
A front side and a rear side of the connection portion on the side of the operation button 10 are respectively on the same planes as a front surface (a surface 13) and a rear surface (a surface 14) of the flange 12 and are respectively smoothly continued to the front surface and the rear surface of the flange 12. Also, two side surfaces (referred to as "side surfaces" in the claims and denoted by numerals 23, 24 in the drawings) of the hinge portion 21 are smoothly continued to the flange 12 by a predetermined R.

Recessed portions 32 are formed on a surface 37 of a main body 31 of the support frame 30. The recessed portions 32 are each provided with, on the part to be the bottom thereof, a surface 33 (referred to as a "specified surface" in the claims).
The connection portion 22 extends in a predetermined axial direction along the surface 33 and is continuously connected to the surface 33 over a specified length.

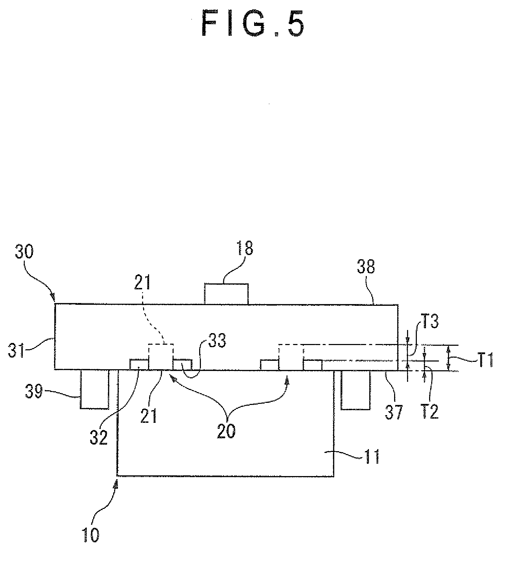

In the present embodiment, as shown in Fig. 5, the thickness of the connection portion 22 is T2 (the length from the surface 33 to the surface 37 of the main body 31, namely the T2 equals to the depth of the recessed portion 32) which is smaller than T1, the thickness of the hinge portion 21. An end part of the shaft-like member of the hinge structure 20 has a portion thereof buried into the support frame 30, the thickness of the portion being T3.
From another point of view, by forming the recessed portion 32 (the depth of which is T2) on the surface 37 of the main body 31 of the support frame 30, the connection portion 22 (the thickness of which is T2) continued from the hinge portion 21 is formed by using a part which belongs to the main body 31.

The hinge portion 21 and the connection portion 22 described above have front surfaces (parallel to the surface 33) continued to each other on the same plane, and have both side surfaces 23, 24 continued to each other on the same plane. Further, a rear surface (the surface on the rear side) of the hinge portion 21 is connected to a surface 36 of the main body 31, and the connected part is smoothly continued by a predetermined R.

In such a hinge structure member, the hinge structure 20 is bent toward the Y-axis direction by the pressure of the operation button 10, and the operation button 10 swings relative to the support frame 30, so that the operation of the switch element on the rear side is performed.
At this time, as shown in Fig. 2, the stress concentration of the hinge structure 20 is generated in the middle part (the hatched area) of the hinge portion 21. Not only the value of the stress is low, but also there is no remarkable generation of the stress in the connection portion 22.
It is believed that the reason of this phenomenon is because the connection portion 22 connects to the main body 31 over a length equal to the thickness of the main body 31 (namely a length equal to the distance between the surface 35 and the surface 36), load transmission can be dispersed, and because the rigidity of the main body 31 in the area around connection portion 22 is reduced, the generation of the stress itself is suppressed.

With the present embodiment, since the stress concentration caused by operation can be relieved to all components from the operation button 10 to the hinge structure 20 and the support frame 30, the possibility of breakage and the like can be reduced.
Particularly, since the stress concentrated on the connection portion of the hinge structure 20 on the side of the support frame 30 is relieved, and since the stress can be mildly generated in the middle part of the hinge portion 21 of the hinge structure 20, the possibility of breakage and the like can be securely reduced. Thus, within the limited space, the stress can be relieved with simple shape and without elongating the hinge portion 21.

In order to relieve the stress concentration, the present embodiment employs the configuration in which the recessed portions 32 are provided on the main body 31 of the support frame 30, which allows the connection portions 22 respectively continued to the hinge portions 21 to be formed, the connection portions 22 being connected to the main body 31 along the surfaces 33 over a specified length.
Thus, the stress can be relieved with minimum necessary structural addition, and existing manufacturing device such as molding dies can be used, so that implementation of the embodiment can be facilitated.

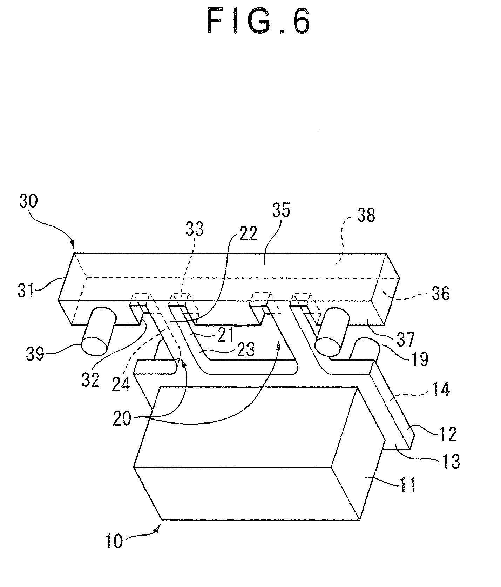

Fig. 6 shows a second embodiment of the present invention.
The present embodiment relates to a hinge structure member similar to that described in the first embodiment. In the following description, like components are denoted by like numerals as of the first embodiment and the explanation thereof will be omitted.

In the present embodiment, similar to the first embodiment, recessed portions 32 are provided on a main body 31, which allows connection portions 22 of hinge structures 20 to be formed.
In the first embodiment, the recessed portion 32 extends across the main body 31 from the surface 35 to the surface 36. In other words, the length of the recessed portion 32 equals to the thickness of the main body 31, and the length of the connection portion 22 equals to the thickness of the main body 31 too.

In contrast, in the present embodiment, the recessed portion 32 extends over a specified length from the lower part of the main body 31 shown in the Figure (along the direction from a surface 36 to a surface 35) and ends at the middle instead of extending across the main body 31 from the surface 35 to the surface 36. Thus, the length of the connection portion 22 of the present embodiment is smaller than the thickness of the main body 31 (the distance between the surface 35 and the surface 36). The connection portion 22 extends from the hinge portion 21 toward the recessed portion 32 of the main body 31 and connected to the main body 31 along a surface 33 over a specified length which is a length smaller than the thickness of the main body 31.

With the present embodiment, the stress concentration can be relieved by the connection portion 22, and the same advantages as in the first embodiment can be obtained.

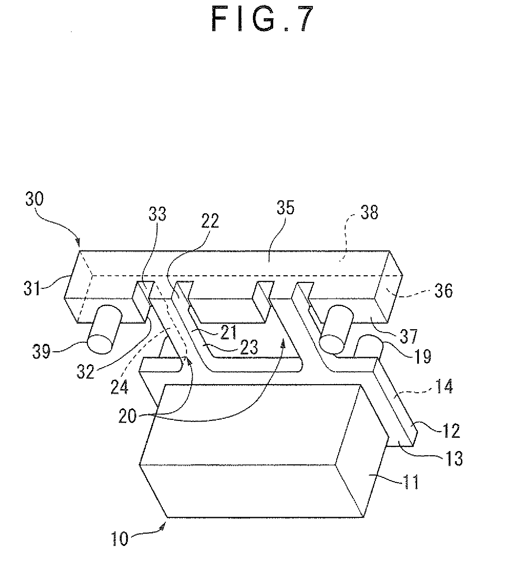

Fig. 7 shows a third embodiment of the present invention.
The present embodiment relates to a hinge structure member similar to that described in the first embodiment. In the following description, like components are denoted by like numerals as of the first embodiment and the explanation thereof will be omitted.

In the present embodiment, similar to the first embodiment, recessed portions 32 are provided on a main body 31, which allows connection portions 22 of hinge structures 20 to be formed.
In the first embodiment, the depth of the recessed portion 32 (the distance between the surface 37 and the surface 33 of the main body 31) is smaller than the thickness of the hinge portion 21, and the thickness of the connection portion 22 is smaller than the thickness of the hinge portion 21.
In contrast, in the present embodiment, the depth of the recessed portion 32 is larger than the thickness of the hinge portion 21, and the thickness of the connection portion 22 is larger than the thickness of the hinge portion 21.

With the present embodiment, the stress concentration can be relieved by the connection portion 22, and the same advantages as in the first embodiment can be obtained.

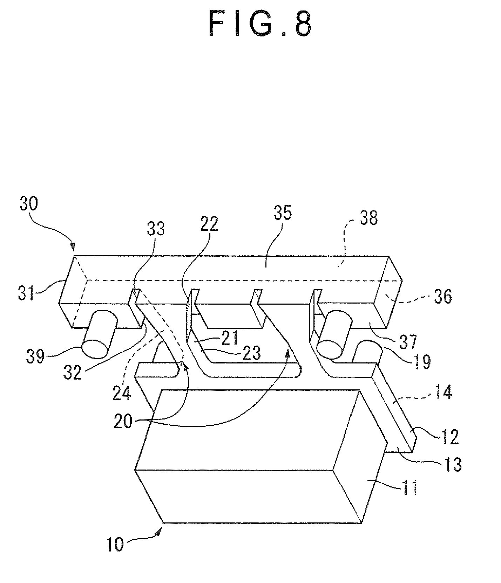

Fig. 8 shows a fourth embodiment of the present invention.
The present embodiment relates to a hinge structure member similar to that described in the first embodiment. In the following description, like components are denoted by like numerals as of the first embodiment and the explanation thereof will be omitted.

In the present embodiment, similar to the first embodiment, recessed portions 32 are provided on a main body 31, which allows connection portions 22 of hinge structures 20 to be formed.
In the first embodiment, the recessed portion 32 has a specified width. The connection portion 22 and the hinge portion 21 have the same cross section, have each of both side surfaces thereof on the same plane, and continue to each other like a shaft-like member extending from the hinge portion 21 toward the connection portion 22.
In contrast, in the present embodiment, the connection portion 22 is arranged on a surface 33, and when viewed from the front, the connection portion 22 has one end on a surface 35 side made long and the other end on a surface 36 side made short. In other words, the connection portion 22 has a dovetail shape. Incidentally, the dovetail continuously extends into the hinge portion 21, and each of side surfaces 23, 24 of the hinge portion 21 partly becomes inclined surface in the vicinity of the connection portion 22 so as to extend to the side surfaces of the connection portion 22 on the same plane.

With the present embodiment, the stress concentration can be relieved by the connection portion 22, and the same advantages as in the first embodiment can be obtained.

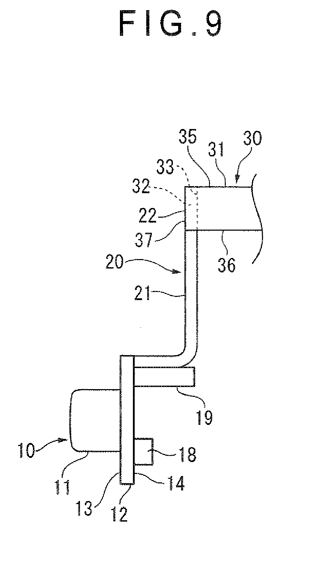

Fig. 9 shows a fifth embodiment of the present invention.
The present embodiment relates to a hinge structure member similar to that described in the first embodiment. In the following description, like components are denoted by like numerals as of the first embodiment and the explanation thereof will be omitted.

In the present embodiment, similar to the first embodiment, recessed portions 32 are provided on a main body 31, which allows connection portions 22 of hinge structure 20 to be formed.
In the first embodiment, the hinge structure 20, which includes the hinge portion 21 and the connection portion 22, extends linearly.
In contrast, in the present embodiment, a hinge structure 20 is L-shaped when viewed from right side (it shows an inversed L shape in Fig. 8).
That is, although the main body 31, the connection portion 22 and the upper part (as shown in the figure) of the hinge portion 21 are the same as those in the first embodiment, the hinge portion 21 bends from the middle part thereof so that the tip end of the hinge portion 21 is connected to the upper edge part of the rear surface of the flange 12 (the other connection portion).

With the present embodiment, the stress concentration can be relieved by the connection portion 22, and the same advantages as in the first embodiment can be obtained.

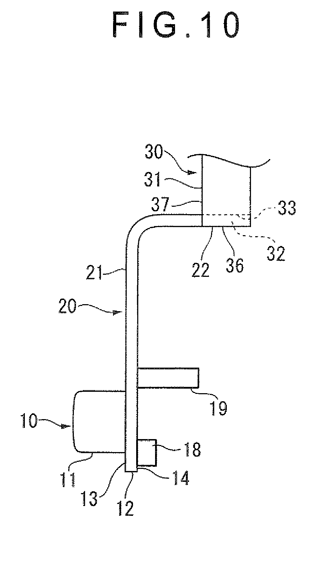

Fig. 10 shows a sixth embodiment of the present invention.
The present embodiment relates to a hinge structure member similar to that described in the first embodiment. In the following description, like components are denoted by like numerals as of the first embodiment and the explanation thereof will be omitted.

In the present embodiment, similar to the first embodiment, recessed portions 32 are provided on a main body 31, which allows connection portions 22 of hinge structure 20 to be formed.
In the first embodiment, the recessed portion 32 and the connection portion 22 are arranged on the surface 37 of the main body 31, and the connection portion 22 extends linearly toward the flange 12 therebelow.
In contrast, in the present embodiment, the recessed portion 32 and the connection portion 22 are arranged on a surface 36 of the main body 31. The hinge portion 21 extends in the negative direction of the Y-axis and then bends downward so as to extend toward the flange 12.

With the present embodiment, the stress concentration can be relieved by the connection portion 22, and the same advantages as in the first embodiment can be obtained.

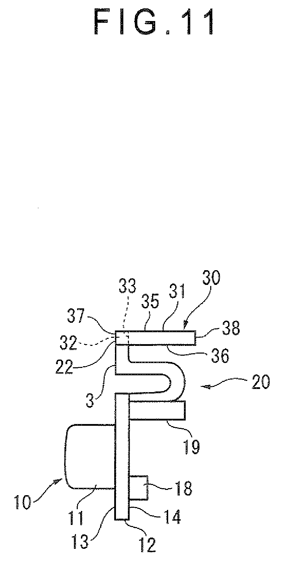

Fig. 11 shows a seventh embodiment of the present invention.
The present embodiment relates to a hinge structure member similar to that described in the first embodiment. In the following description, like components are denoted by like numerals as of the first embodiment and the explanation thereof will be omitted.

In the present embodiment, similar to the first embodiment, recessed portions 32 are provided on a main body 31, which allows connection portions 22 of hinge structure 20 to be formed.
In the first embodiment, the recessed portion 32 and the connection portion 22 are arranged on the surface 37, and the connection portion 22 extends linearly toward the flange 12 therebelow.
In contrast, in the present embodiment, the hinge portion 22 is bent into substantially U-shape from the middle thereof, so that the tip end of the hinge portion 21 is connected to the upper edge part of the rear surface (a surface 14) of a flange 12 (the other connection portion).

With the present embodiment, the stress concentration can be relieved by the connection portion 22, and the same advantages as in the first embodiment can be obtained.

It is to be understood that the present invention is not limited to the embodiments described above, and various modifications and improvements can be made as long as the objects of the present invention can be achieved.
For example, although one support frame 30 is provided with one operation switch 10 in the aforesaid embodiments, there is an alternative configuration in which one support frame 30 is provided with a plurality of operation switches 10 as shown in Fig. 11.
With this configuration, a plurality of the operation buttons of electrical equipment and the like can be incorporated collectively, so that good workability can be achieved.

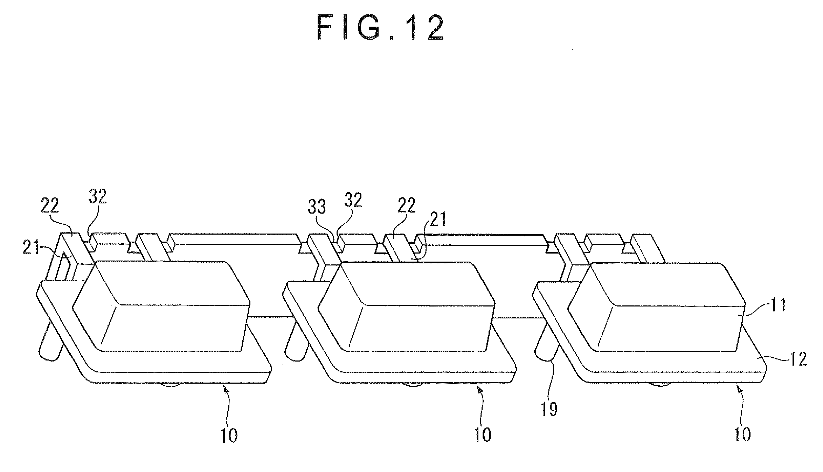

Also, although the connection portion 22 is formed inside the recessed portion 32 in the aforesaid embodiments, there is an alternative configuration (as shown in Fig. 12) in which a recessed portion 32 is provided on one side of the vicinity of the end of the main body 31, and a hinge portion 21 defined by the end of the main body 31 is provided on the other side (refer to the left operation button 10 shown in Fig. 12).

Further, although the connection portion 22 is arranged inside the recessed portion 32 according to the aforesaid embodiments, the recessed portion 32 does not have to be such formed. For example, a vertical side surface of the main body 31 (a surface flush with the surface 35) may serve as a surface 33, and a connection portion 22 can be formed without employing a recessed portion 32 by welding an end side surface of a square column-shaped hinge portion 21 extending in a direction perpendicular to the surface 33 (the negative direction of the Z-axis) to the surface 33.
Alternatively, the same shape may be integrally formed by molding instead of welding.

Further, although each operation button 10 is provided with two hinge structures 20 in the aforesaid embodiments, the number of the hinge structure may be one, three or more than three.
Further, not only the hinge structure 20 can have different shape such as exemplified in the aforesaid embodiments, but also the cross section of the hinge structure 20 is not limited to a rectangle (namely the hinge portion does not have to be square column-shaped) but can be a circle (namely the hinge portion can be round-bar-shaped) or the like.

Further, although the hinge structures 20, the operation button 10 and the support frame 30 are integrally formed by molding a synthetic resin in the aforesaid embodiments, the hinge structure member does not have to be integrally formed as a whole. For example, there is an alternative configuration in which the hinge structures 20 and the support frame 30 are integrally formed, to which an separately formed operation button 10 is connected.

Further, part or whole of the hinge structure 20 and the hinge structure member of the present invention may be formed by material such as metal, wood or other natural material instead of the synthetic resin as long as at least the following condition can be satisfied: the hinge structure 20 is elastically deformable, and the stress can be relieved by the connection portion 22 when the movable member such as the operation button 10 swings relative to the fixed member such as the support frame 30.

The present invention can be applied not only to on-vehicle electrical equipment as mentioned in the aforesaid embodiments, but also to various other operation parts. Also, the movable member is not limited to the operation button 10 and the fixed member is not limited to the support frame 30.

### [INDUSTRIAL APPLICABILITY]

The present invention can be applied to a hinge structure and a hinge structure member, such as an operation button of an electrical equipment.

## Claims

1. A hinge structure comprising:
a hinge portion for swingably connecting a pair of connected portions to each other, and
a pair of connection portions adapted to connect the hinge portion to the connected portions,
wherein at least one of the connection portions is extended in an axial direction along a specified surface of one of the connected portions and continuously connected to the specified surface.

2. The hinge structure according to claim 1, wherein
the connection portion and the hinge portion are integrally formed by molding elastically deformable synthetic resin.

3. The hinge structure according to claim 2, wherein
the connection portion, the hinge portion and the connected portions are integrally formed.

4. The hinge structure according to claim 3, wherein
the connection portion is arranged in a recessed portion provided on the specified surface of the connected portion.

5. The hinge structure according to any one of claims 1 to 4, wherein
the hinge portion is arranged in the axial direction.

6. The hinge structure according to any one of claims 1 to 5, wherein
the hinge portion and at least one of the connection portions have their side surfaces smoothly continued to each other.

7. A hinge structure member comprising:
a pair of connected portions;
a hinge portion for swingably connecting the pair of connected portions to each other; and
a pair of connection portions adapted to connect the hinge portion to the connected portions,
wherein at least one of the connection portions is extended in an axial direction along a specified surface of one of the connected portions and continuously connected to the specified surface.

8. The hinge structure member according to claim 7, wherein
one of the connected portions is a fixed member, and the other of the connected portions is a movable member.

9. The hinge structure member according to claim 8, wherein
the fixed member is a support frame, and the movable member is an operation button.
